# FASCICULE DE BREVET EUROPEEN

(11) **EP 3 468 856 B1**
(45) Date de publication et mention de la délivrance du brevet: **18.11.2020**
(21) Numéro de dépôt: 17732527.1
(22) Date de dépôt: 09.06.2017
(51) Int. Cl.: B62B 9/00, B62B 9/28, B62B 5/00, B62B 5/08, B62B 7/04

(54) **DISPOSITIF D'ASSISTANCE À LA MOBILITÉ POUR POUSSETTE OU CHARIOT**
HILFSMITTEL ZUR BEWEGUNG EINES KINDERWAGENS ODER HANDWAGENS
PROPULSION AID FOR A STROLLER OR HAND CART

(30) Priorité: 10.06.2016 FR 1655376
(43) Date de publication de la demande: 17.04.2019
(73) Titulaire: Mobinov, 78170 La Celle St Cloud (FR)
(72) Inventeur: VIX, Stéphane, 78170 LA CELLE ST CLOUD (FR)
(74) Mandataire: IPAZ
(86) Numéro de dépôt international: PCT/FR2017/051460
(87) Numéro de publication internationale: WO 2017/212184

(56) Documents cités:
- CN-A- 104 290 797
- DE-A1- 10 332 133
- DE-A1- 19 909 020
- DE-A1-102007 004 704
- DE-A1-102012 017 977
- DE-C- 890 161
- US-B1- 6 360 836

## Description

### DOMAINE ET CONTEXTE DE L'INVENTION

La présente invention concerne les dispositifs d'assistance à la mobilité, notamment pour poussette ou chariot léger à au moins trois roues.

Les poussettes pour bébés ou enfants sont des articles très utilisés dans la vie de tous les jours, lorsqu'on s'occupe d'enfants, ce qui est le cas notamment des assistantes maternelles.

Les personnes qui s'occupent de plusieurs enfants en bas âge, que ce soit des jumeaux, des triplés ou de plusieurs enfants d'âge proche, sont amenés à utiliser des poussettes dites double ou triple ou multiple, avec deux ou trois places ou plus pour asseoir un enfant, disposées soit côte-à-côte soit l'une devant l'autre.

Dans ce cas, la poussette peut être assez lourdement chargée et son maniement devient beaucoup moins aisé que celui d'une poussette simple légèrement chargée. Un adulte peut avoir des difficultés à manœuvrer et/ou déplacer la poussette, d'autant plus si le sol n'est pas horizontal et présente une certaine déclivité (e.g. montée).

Par ailleurs, il est connu d'utiliser un marchepied à roulettes pour accueillir un enfant supplémentaire en position debout.

Par conséquent, il est utile de prévoir un système d'assistance à la poussée et la manœuvre des poussettes. Bien entendu, on peut penser à une assistance basée sur une ou plusieurs roues entrainées par un moteur électrique avec une batterie électrique.

Une telle solution est divulguée par le document US 7490684. Mais selon la configuration proposée, il est nécessaire de prévoir l'assistance électrique dans la conception de base de la poussette, ce qui augmente le coût des poussettes ; de plus cette solution n'est pas envisageable en solution de retro-fit c'est-à-dire un module « add-on » que l'on peut accoupler à une poussette standard sans motorisation.

Une autre solution est divulguée par le document US6360836. Toutefois, le dispositif d'assistance n'est pas très facile à installer et surtout ce dispositif a tendance à empêcher/gêner rendre les virages difficiles à entreprendre ou négocier car en effet il est fait pour avancer en ligne droite. De plus un tel dispositif ne convient pas bien au vu de la grande diversité des structures de poussette. De plus un tel dispositif entraine l'inclinaison vers l'avant des sièges des enfants ce qui risque de la déstabiliser et cela gêne l'accès au frein parking de la poussette.

Les documents DE 199 09 020 et DE 10 2007 004 704 décrivent également des dispositifs d'assistance avec roue motorisée, à installer sur des engins. Le document DE 10 2012 017 977 décrit un engin comprenant une roue motorisée.

Les solutions existantes ne s'adaptent pas bien à diverses configurations mécaniques et géométriques des poussettes.

Il subsiste donc un besoin d'améliorer les solutions existantes pour proposer une assistance électrique à installer facilement sur des poussettes existantes, et qui conviennent bien aussi pour faciliter les manœuvres en virage. Plus généralement, ce besoin existe aussi concernant une assistance à installer sur des chariots à roues comme par exemple les chariots de supermarché (aussi appelé 'caddie™') ou les fauteuils roulants ou d'autres chariots de manutention similaires.

### BREF EXPOSE DE L'INVENTION

À cet effet, il est proposé ici un dispositif d'assistance selon la revendication Des modes de réalisation préférés sont définis dans les revendications dépendantes. Ce dispositif d'assistance à la mobilité, est destiné à être accouplé à un engin à propulser de type poussette ou caddie™ ou fauteuil roulant ou chariot léger à au moins trois roues à conduite manuelle, le dispositif comprenant :
- au moins une roue motorisée (1) montée grâce à une liaison articulée sur une platine-support (2),
- un premier bras (3) relié, à une première de ses extrémités, à un premier côté de la platine-support, et relié à une deuxième de ses extrémités, via un premier moyen de fixation à un premier montant de l'engin à propulser,
- un deuxième bras (4) relié, à une première de ses extrémités, à un deuxième côté de la platine-support, et relié à une deuxième de ses extrémités, à un deuxième moyen de fixation à un deuxième montant de l'engin à propulser,
caractérisé en ce que la liaison articulée est telle que la roue motorisée (1) est montée sur une chape (6) selon un axe de roue horizontal (W), la chape étant montée à rotation libre sur la platine-support selon un axe vertical (V), et en ce que la liaison articulée comporte une connexion électrique tournante (7) pour alimenter le moteur de la roue en énergie électrique sur une plage angulaire d'au moins 360° concernant la chape autour de l'axe vertical.

On note qu'il peut y avoir une roue motorisée ou deux roues motorisées selon diverses configurations possibles.

Grâce aux dispositions ci-dessus, la (les) roue(s) motorisée(s) est(sont) montée(s) comme une roue folle, et procure(nt) une assistance pour l'avance en ligne droite et en virage, les bras du module d'assistance poussant les montants de l'engin à propulser.

On remarque que le montage à rotation libre de type « roue folle » énoncé ci-dessus implique une certaine distance entre l'axe vertical V de rotation de la chape et l'axe de roue W, autrement dot V et W ne sont pas concourants et sont espacés d'une distance par exemple d'au moins 10mm.

Le montage à rotation libre associée à la connexion électrique tournante autorise avantageusement une rotation de plus de 360°, plusieurs tours (même un nombre infini), sans aucune limite ou butée.

Grâce aux bras et au moyen de fixation, le module d'assistance peut être accouplé à différents types de poussette ou plus généralement différents types d'engin à propulser, il s'agit d'un montage quasi universel.

Dans divers modes de réalisation de l'invention, on peut éventuellement avoir recours en outre à l'une et/ou à l'autre des dispositions suivantes.

Selon une option, les premier et deuxième bras sont à réglage télescopique, et sont de préférence inclinés d'un angle (β) d'au moins 15 degrés par rapport à la verticale en position d'accouplement sur l'engin.

Bénéfice ainsi obtenu : adaptation à tout type de poussette, et de plus on obtient un effet de coin/pincement par la disposition pendulaire, ce qui favorise l'accroche et l'adhérence au sol de la roue motorisée. Le dispositif pousse efficacement les montants du guidon ou la structure de la poussette.

Selon une option, il est prévu une biellette, reliant la platine support et un des bras, la biellette étant réglable en longueur ; de sorte qu'il est possible de conserver la position relative d'au moins un des bras en cas de démontage. La biellette permet également de rigidifier les bras. Il peut y avoir deux biellettes, une sur chaque bras.

Selon une option, le dispositif comprend au moins une batterie, une gâchette électrique de commande, et une unité de commande. Moyennant quoi le dispositif est autonome et facile à utiliser.

Selon une option, les premier et deuxième moyens de fixation comportent une rotule et une attache rapide, pour faciliter la fixation à divers types de montant.

Ainsi, on obtient une fixation aisée à tout type de montant de poussette. La liaison rotule permet notamment le passage de trottoirs, et plus généralement une souplesse concernant l'angle β, pour les franchissements de seuil en descente ou en montée.

L'invention selon la revendication 7 vise aussi un engin de type poussette ou caddie™ ou fauteuil roulant, ou chariot léger à au moins trois roues, motorisé par un dispositif d'assistance tel que décrit précédemment. Autrement dit, il s'agit d'un système d'assistance quasi universel qui peut s'adapter sur un grand nombre d'engins à propulser.

Selon une option, l'invention selon la revendication 8 vise aussi une poussette motorisée par un dispositif d'assistance tel que décrit précédemment, les premier et deuxième bras étant fixés aux montants ou à la structure de la poussette et inclinés par rapport à la verticale d'un angle (β) compris de préférence entre 30 et 80 degrés, plus préférentiellement compris entre 40 et 60 degrés.

Selon une option, la platine-support peut former un marchepied (20) ou plateforme pour accueillir un enfant ou des objets.

Selon une solution alternative, la platine-support est relativement étroite et forme simplement un support pour la chape de roue et le boitier de l'unité de commande, sans aucun marchepied.

On offre ainsi la possibilité d'accueillir un enfant debout sur le marchepied, ou bien de poser des objets même lourds et/ou encombrants.

Selon une option, la platine-support peut comprendre des roulettes latérales (8G,8D), qui lorsque la roue motorisée repose au sol, et sans contrainte sur la platine-support, les roulettes latérales sont espacées du sol d'un garde prédéfinie (E) comprise entre 0,5 cm et 2 cm, préférentiellement 1 cm.
Bénéfice obtenu: les roulettes permettent de supporter le poids d'un enfant sur le marchepied et d'éviter un déséquilibre si l'enfant debout est en position décentrée, et par ailleurs même si le sol n'est pas plat, le risque que la roue motorisée ne touche pas le sol est diminué.

Selon une option, la platine-support présente une garde au sol (GS) d'au moins 20 cm de part et d'autre de la roue motorisée.
Bénéfice obtenu: les pieds du conducteur de la poussette ne sont pas gênés par la présence du dispositif, ils se glissent aisément dessous.

Selon une option, il est prévu un réglage en largeur grâce à deux tubes (9G,9D) reçus dans une glissière ménagée dans la platine-support, les premier et deuxième bras étant fixés aux extrémités extérieures des tubes.

On fournit ainsi une fixation aisée à tout type de montant de poussette, quelle que soit la distance entre les deux montants.

Selon une option, les roulettes latérales sont montées sur les extrémités extérieures des tubes.
Avantageusement, la voie des roulettes suit ainsi le réglage en largeur.

Selon une option, on prévoit pour chaque bras, à sa première extrémité, un montage à rotation et verrouillable, sur l'extrémité latérale de la platine-support ou des tubes coulissants. Ceci permet de se fixer à des endroits plus ou moins hauts sur la structure de la poussette. De plus, cela facilite le réglage de l'angle d'inclinaison des bras, de manière à avoir la platine-support bien horizontale avec l'inclinaison nominale des bras pour chaque type de poussette considéré.

### EXPOSE DES FIGURES

D'autres caractéristiques et avantages de l'invention apparaîtront au cours de la description suivante donnée à titre d'exemple non limitatif, en regard des dessins joints, sur lesquels :
- la figure 1 est une vue générale en perspective représentant une poussette multiple équipée d'un module d'assistance à la mobilité selon un premier mode de réalisation de l'invention,
- la figure 2 représente en perspective une vue plus en détail du module d'assistance à la mobilité selon l'invention ;
- la figure 3 est une vue schématique du module d'assistance à la mobilité,
- la figure 4 est une représentation éclatée de la platine-support,
- la figure 5 montre une vue arrière en élévation,
- la figure 6 montre une vue coté en élévation,
- la figure 7 montre une vue de dessus du module d'assistance à la mobilité
- la figure 8 est une vue schématique de profil avec les différentes positions angulaires du module d'assistance,
- la figure 9 est une vue schématique de dessus des roues du module d'assistance à la mobilité et des roues de la poussette,
- la figure 10 concerne un autre mode de réalisation et montre, de manière analogue à la figure 5, une vue arrière en élévation, avec deux roues motrices montées folles,
- la figure 11 illustre une variante de réalisation concernant la liaison inférieure des bras sur la platine-support,
- la figure 12 présente un exemple de schéma bloc électrique,
- les figures 13, 14 et 15 présentent un second mode de réalisation, en partie schématiquement, avec une platine support étroite sans marchepied, la figure 13 présentant une vue de face, la figure 14 présentant une vue de côté et la figure 15 présentant une vue de dessus.

### DESCRIPTION DETAILLEE DE L'INVENTION

Sur les différentes figures, les mêmes références désignent des éléments identiques ou similaires.

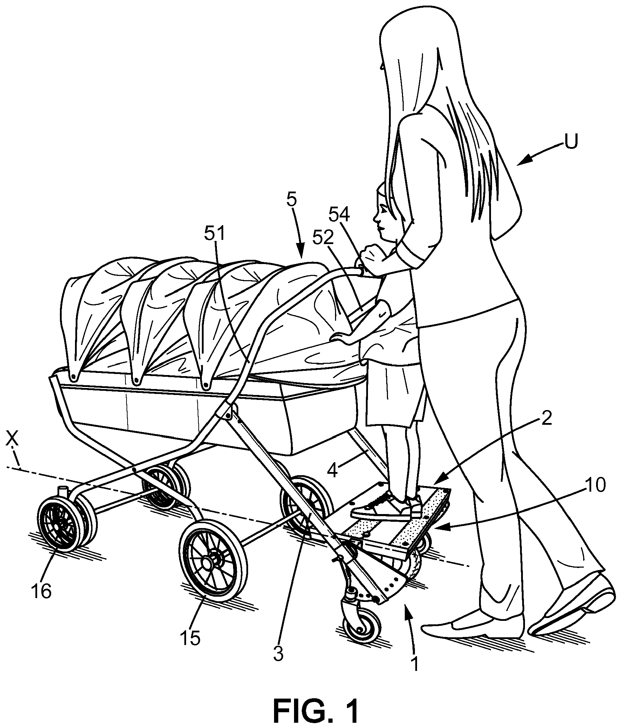

Sur la figure 1, on a représenté une poussette 5, ici un modèle à trois places en ligne.

Il faut noter que l'invention peut être appliquée à divers types de poussettes, monoplace, biplace, triplace ou multiplaces en général. Les poussettes en question peuvent avoir 4 roues, 4 paires de roues (cas de roues jumelles) 3 roues ou 3 paires de roues ; cela n'exclut pas les poussettes ou plus de 4 roues ou plus de 4 paires de roues. Une poussette comprend d'une part une structure ou armature, pliable ou non-pliable, et d'autre part une nacelle ou siège simple ou multiple, voire plusieurs nacelles/sièges. D'autres éléments de détails de la poussette ne sont pas décrits en détails car considérés comme connu en soi.

Il faut noter que l'invention peut aussi être appliquée à un caddie™, à savoir un chariot de supermarché, ou encore un fauteuil roulant pour personnes à mobilité réduite ou encore un chariot de manutention léger.

Les poussettes et ces petits véhicules sont appelés ici génériquement *'engin à propulser'* car en effet, il s'agit d'un appareil à conduite manuelle, c'est-à-dire qu'un utilisateur **U** dirige et pousse/tire l'engin à propulser. Les actions et efforts exercés par l'utilisateur seront avantageusement renforcés voire suppléés en partie par des efforts ajoutés par un **module d'assistance à la mobilité 10** prévu par la présente invention.

L'engin à propulser **5** comprend comme connu en soi une structure avec d'une part des roues **15,16,** et d'autres part des poignées et/ou un guidon et/ou une barre de préhension **54** qui sert d'interface pour les mains de l'utilisateur.

L'engin **5** comprend également des montants **51,52** ou traverses sur lesquels peut être fixé le module d'assistance à la mobilité **10.**

On note **X** la direction d'avancement, **Z** la direction verticale et **Y** la direction transversale perpendiculaire aux deux autres, ce qui forme le repère cartésien local.

Le sol **S** sur lequel évolue la poussette n'est pas toujours plat. Il peut y avoir des irrégularités locales, par exemple un sol brut ou un revêtement irrégulier. Il peut y avoir une pente générale, chemin ou rue en pente, rampe de garage ou équivalent.

Le cas du franchissement de seuil ou de trottoir, en descente ou en montée sera vu en détail plus loin.

Dans l'exemple illustré aux figures 1-4, relatif à un premier mode de réalisation, le dispositif d'assistance **10** comprend une **platine-support 2.** Dans l'exemple illustré, la platine-support **2** se présente comme une planche rectangulaire assez épaisse, s'étendant sur sa grande longueur **LY** (typiquement de l'ordre de 40cm) entre un premier coté **21** et un deuxième côté **22** selon la direction transversale **Y.** La petite longueur **LX** (typiquement de 22 à 25cm) selon la direction d'avancement **X.**

Selon une configuration, on pourra choisir comme épaisseur pour la platine support une valeur voisine 5 cm. Toutefois, la platine support 2 pourrait être plus épaisse en fonction des différentes technologies de batteries possibles.

Le dispositif d'assistance **10** comprend deux bras, à savoir un **premier bras 3** avec une première de ses extrémités **31** reliée au premier côté **21** de la platine-support, et une deuxième de ses extrémités **32,** destinée à être accouplée à un premier montant 51 de l'engin à propulser, via un premier moyen de fixation **35,** et un **deuxième bras 4** avec une première de ses extrémités **41** reliée au deuxième côté **22** de la platine-support, et une deuxième de ses extrémités **42,** destinée à être accouplée à un deuxième montant **52** de l'engin à propulser, via un deuxième moyen de fixation **36.**

Le dispositif d'assistance **10** comprend une **roue motorisée 1** montée sur la platine-support **2,** grâce à une liaison articulée discutée plus loin. La roue motorisée **1** comprend un moyeu fixe qui porte le stator, et le rotor est externe et solidaire de la jante de roue. Ce type de roue motorisée **1** est connu en soi et donc non décrit plus avant ici. On choisira de préférence une roue motorisée ayant un diamètre compris entre 15 cm et 25 cm. On choisira de préférence une roue motorisée délivrant une puissance comprise entre 150 W et 250 W.

Dans l'exemple illustré aux figures 1-7, on dispose une roue motorisée unique montée en partie médiane de la platine-support **2** c'est-à-dire à mi-chemin entre les premier et deuxième cotés **21,22.**

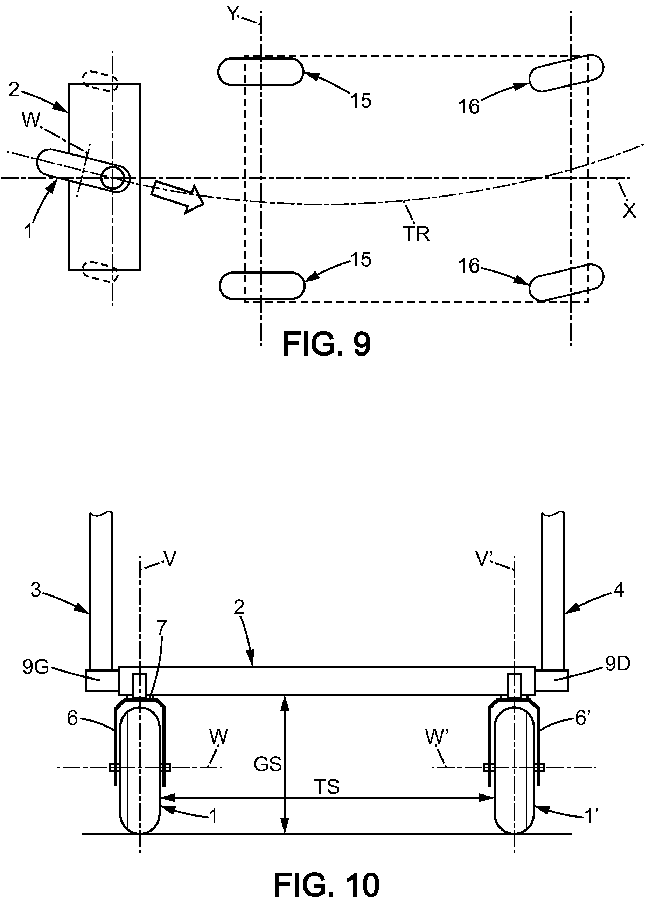

Selon une autre configuration, décrite plus loin en figure 10, on peut aussi avoir deux roues motorisées, une roue **6** disposée au niveau du premier coté **21** et une autre **6'** disposée au niveau du deuxième coté **22.**

Le montage de la roue motorisée sur la platine-support **2** est de type «roue folle ». Plus précisément, la roue motorisée 1 est montée sur une **chape 6** (qu'on peut aussi appelée 'fourche') elle-même montée à rotation libre sur la platine-support selon un axe substantiellement vertical noté **V.**

La chape **6** comprend dans sa portion supérieure une âme équipée d'une couronne de liaison tournante et comprend deux jambes qui s'étendent depuis ladite âme vers le bas pour recevoir et loger l'axe de roue.

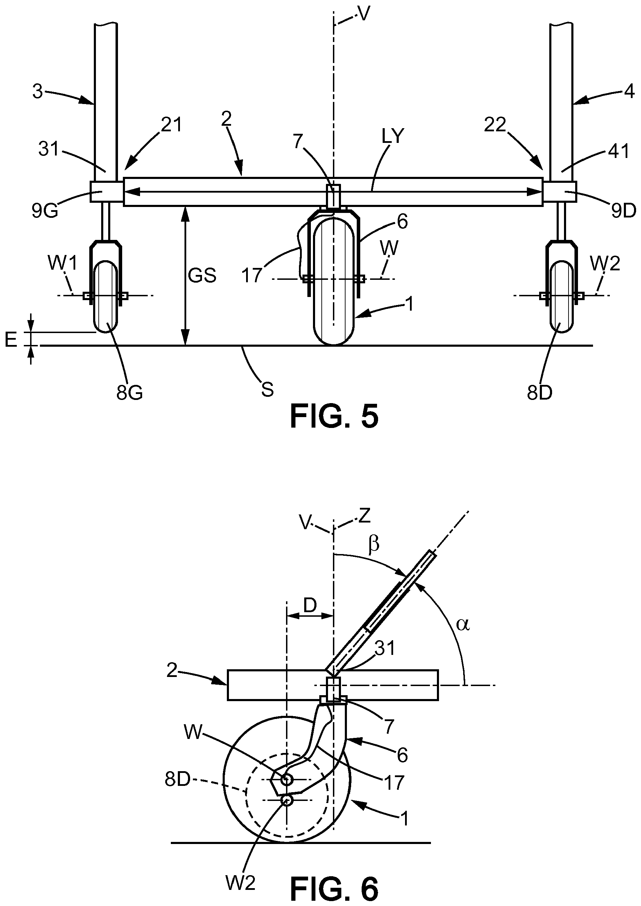

L'axe de roue noté **W** est horizontal et est en position décalée de l'axe vertical noté **V,** ce qui caractérise le montage en roue folle (le décalage des axes **V,W** est repéré par la distance **D** figure 6, la distance **D** est analogue à ce qu'on appelle « angle de chasse » sur une fourche de vélo).

Selon ce montage, un déplacement horizontal tend à faire passer l'axe de roue **W** derrière l'axe vertical **V,** et cette position favorise la stabilité, la roue folle tend à s'aligner sur la direction de déplacement **X** et l'axe de roue **W** tend à s'aligner sur la direction transversale **Y** au déplacement.

La distance **D** aura une valeur généralement supérieure ou égale à 10 mm, préférentiellement entre 30 mm et 70 mm, typiquement de l'ordre de 50 mm.

Selon la présente invention, la motorisation fournit un couple d'assistance qui tend à faire avancer la roue vers l'axe vertical **V.**

En outre, le dispositif d'assistance **10** comprend une (ou plusieurs) batterie(s) **12,** une gâchette électrique **14** de commande, et une unité de commande **11.** La gâchette électrique **14** est disposée à proximité des poignées et/ou du guidon et/ou de la barre de préhension qui sert d'interface pour les mains de l'utilisateur. La gâchette électrique peut être de type tout-ou-rien ou proportionnelle. La gâchette électrique peut être activée sélectivement par l'utilisateur, c'est-à-dire en fonction du besoin d'assistance.

L'unité de commande **11** prend en compte les signaux de la gâchette électrique **14** pour commander un couple sur la roue motorisée. Le maniement de la gâchette électrique peut être sécurisé par une disposition mécanique confinée et/ou un effort suffisant de manœuvre.

On peut avoir recours à un capteur additionnel pour sécuriser la prise en compte des signaux de la gâchette électrique.

La liaison pivot de la chape **6** comporte une connexion électrique tournante **7** ('connecteur tournant') pour alimenter le moteur de la roue en énergie électrique de façon continue.

La rotation possible n'est pas limitée, on obtient plus de 360 degrés, plusieurs tours, un nombre infini de tours, sans aucune limite ou butée.

Le connecteur tournant comprend des pistes circulaires ou annulaires centrées sur l'axe **V,** sur lesquelles frottent sur des contacts de la partie complémentaire.

Les signaux de commande peuvent passer par le connecteur tournant **7** ou être transmis en mode sans fil par exemple par Bluetooth™.

Entre le connecteur tournant **7** et le moyeu stator de la roue motorisée, on prévoit une connexion filaire externe **17** (Fig 5). En variante, la connexion filaire peut être intégrée dans les jambes de la chape supportant la roue, ce qui évite tout endommagement éventuel ou coincement éventuel.

Le pilotage de la puissance électrique injectée dans le stator peut être fait en local au niveau du stator ou bien dans l'unité de commande 11. Ainsi la connexion filaire externe **17** peut transporter soit une alimentation électrique positive et négative, et des commandes en signaux logiques, ou bien directement les courants de commande de puissance.

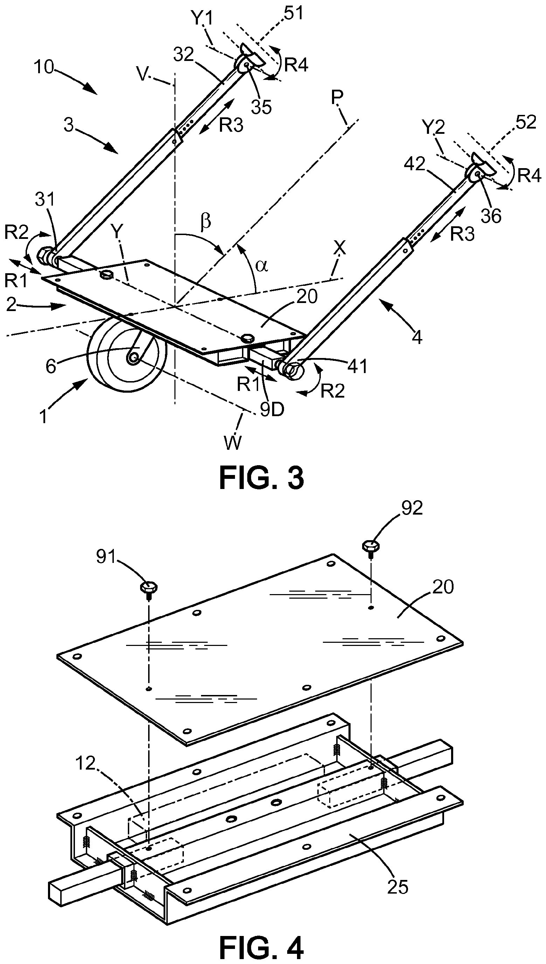

Les premier et deuxième bras **3,4** sont de préférence à réglage télescopique, la longueur pouvant être ainsi adaptée. Ce mouvement de réglage est repéré **R3** à la figure 3. Pour la fonction télescopique des bras 3,4, on peut prévoir un tube coulissant à l'intérieur d'un autre tube de section juste supérieure, et une fonction verrou ou frein qui conserve la position relative courante. La fonction verrou peut être formée par un pion à rappel monté sur le gros tube qui peut s'engager dans des trous agencés dans le petit tube (cf Fig 3).

L'adaptation de longueur **R3** permet d'obtenir un angle **β** adéquat, à savoir généralement compris entre 30 et 80 degrés, de préférence compris entre 40 et 60 degrés. Ceci permet de se fixer les bras du module sur un endroit quelconque de la structure de la poussette.

De façon plus générale, on prévoit d'avoir un angle **β** d'au moins 15 degrés par rapport à la verticale en position d'accouplement sur l'engin à propulser.

La deuxième extrémité **32** du premier bras 3 comporte un moyen de fixation **35** avec une rotule et une attache rapide. Un exemple d'une telle attache rapide peut être formé par une pince à vis. Mais d'une façon générale, on peut utiliser tout type d'attache rapide connu et donc non décrite ici en détail.

La rotule inclut au moins une liaison pivot d'axe **Y1.**

De manière analogue, la deuxième extrémité **42** du deuxième bras 3 comporte un moyen de fixation **36** avec une rotule et une attache rapide.

La rotule inclut au moins une liaison pivot d'axe **Y2.**

La liaison pivot formée par les rotules est repérée généralement par **R4.**

Par exemple, pour la solution de la pince à vis, on peut utiliser deux doigts courbes qui peuvent se resserrer sur un montant de type tube de section ronde.

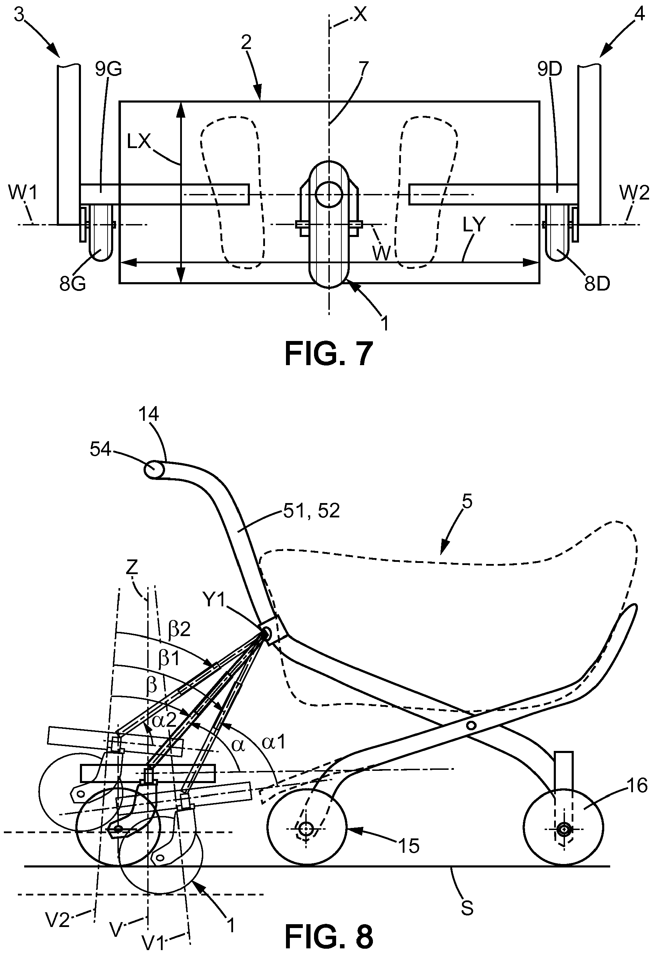

La platine-support **2** forme aussi dans cet exemple une fonction marchepied. Dans cet exemple, on prévoit une surface supérieure plane **20,** pour recevoir un enfant debout (voir les empreintes de pieds figure 7). On peut prévoir une ou plusieurs bandes antidérapantes **27** sur la surface supérieure.

La platine-support **2** comprend également un carter **25** qui forme un logement pour une ou plusieurs batteries électriques **12** déjà mentionnées. La platine-support **2** peut également héberger l'unité de commande **11.**

Le carter peut contenir des logements de réception, aussi appelée glissière, pour les tubes de réglage transversal qui seront décrits plus loin.

La platine-support présente une garde au sol notée **GS** d'au moins 20 cm de part et d'autre de la roue motorisée. Au cours de la marche, les pieds de l'utilisateur U peuvent ainsi avancer sous la platine support 2.

La platine-support comprend des roulettes latérales **8G,8D.** La roulette gauche **8G** a un axe de roue **Wl,** la roulette droite **8D** a un axe de roue **W2.**

De préférence, les roulettes latérales **8G,8D** ont également un montage de type folle suiveuse.

Les axes de la roue motrice **1** et des deux roulettes latérales, à savoir les axes **W,W1,W2** sont alignés depuis une vue de dessus (cf figure 7).

Lorsque la roue motorisée repose au sol, et sans contrainte sur la platine-support **2,** les roulettes latérales sont espacées du sol d'un garde prédéfinie **E** comprise entre 0,5 cm et 2 cm, préférentiellement 1 cm.

Il est prévu un réglage en largeur grâce à deux tubes **9G,9D** reçus dans une glissière ménagée dans la platine-support, les premier et deuxième bras étant fixés aux extrémités extérieures des tubes. Comme visible sur la figure 4, chacun des deux tubes peut coulisser parallèlement à l'axe transversal **Y** et peut être immobilisé grâce à des molettes à vis **91,92** faciles à manoeuvrer par l'utilisateur. Ainsi, le réglage de l'écartement latéral repéré **R1** (fig 3) est très aisé.

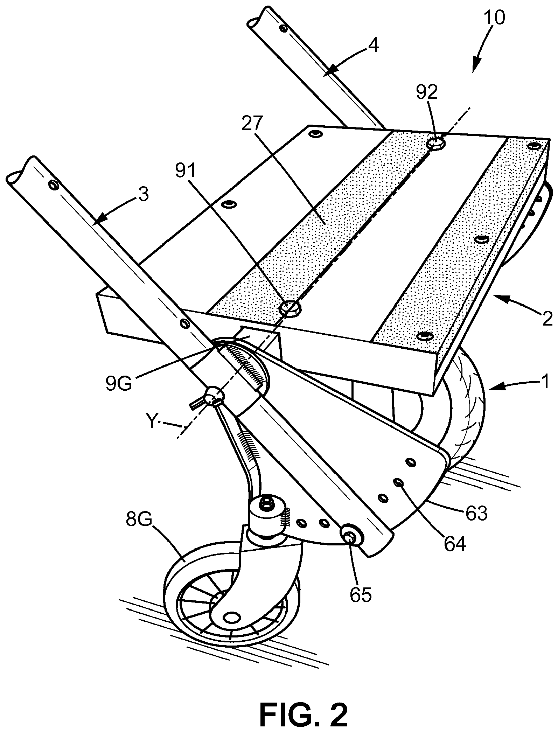

Le réglage de la position angulaire des bras par rapport à la platine, repéré **R2,** peut être effectué selon une première solution illustrée à la figure 2 par un système de secteur à trous **64.** Plus précisément, un flan métallique **63** solidaire de l'extrémité du tube gauche présente une forme d'arc et une pluralité de trous dans lesquels peut s'engager une goupille **65** solidaire de l'extrémité du bras. La goupille est rappelée par un ressort en direction du trou et peut être écartée par une manoeuvre de l'utilisateur. Dans ce montage, le bras **3** pivote autour de l'axe **Y** centré sur le tube et l'extrémité du bras se prolonge en biais vers le sol en porte-à-faux, et porte le logement pour la goupille 65.

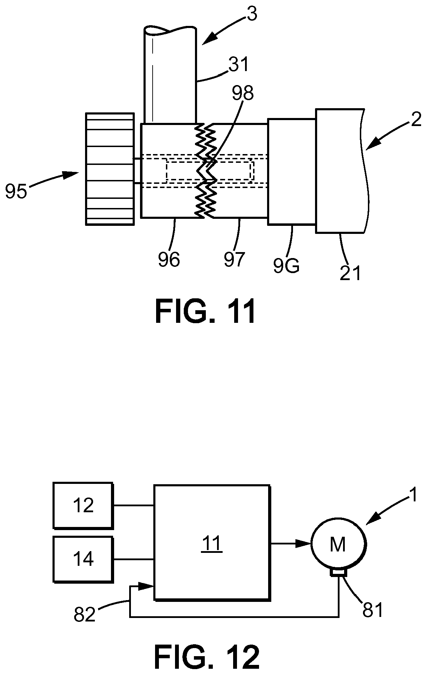

Selon une seconde solution illustrée à la figure 11, on utilise un système d'anneaux crantés complémentaires, à savoir un premier anneau cranté **97** solidaire de l'extrémité du tube **9G,** et un deuxième anneau cranté **96** solidaire de l'extrémité **31** du bras **3.** Les dentures radiales des deux anneaux se font face et sont adaptées pour interfèrer entre elles afin d'immobiliser tout mouvement de rotation relatif. En outre, une vis de serrage **98** associée à une molette de manœuvre **95** permet de serrer / desserrer le montage des anneaux crantés. En pratique, on desserre puis on règle puis on resserre.

Il faut remarquer que les mouvements notés **R1, R2** et **R3** sont des mouvements de réglage possible, mais que dès que le réglage est obtenu, ces mouvements sont immobilisés. Seul le mouvement de rotule **R4** à proximité des montants de la poussette reste libre. Moyennant quoi on obtient une certaine rigidité du montage du module d'assistance 10 ; en pratique une rigidité suffisante de la liaison des bras à la platine est requise.

La figure 8 illustre divers cas de franchissement de seuil(s) en montée ou en descente.

Deux cas de figure se présentent, un cas ou l'angle **β** se referme (cas **β1,α1**), dans le cas où la platine support repose sur une zone plus basse que le plan de la poussette ou bien lorsque l'utilisateur soulève les roues arrière de la poussette, un autre cas ou l'angle **β** s'ouvre (cas **β2,α2**), dans le cas où la platine support repose sur une zone plus haute que le plan de la poussette ou bien lorsque l'utilisateur soulève les roues avant de la poussette (passage d'un seuil/trottoir).

On remarque aussi que la direction **V,** normale à la surface de la planche **20** s'écarte de la verticale locale **Z** dès lors que l'ensemble poussette+module n'est pas sur un sol plan, ou dès lors que l'on franchit une marche, comme illustré aux repères **V1,V2.**

On note aussi que l'angle **α** peut être fixé une fois pour toute par exemple 45°, ou bien plus avantageusement l'angle **α** peut être réglable entre 30° et 80° selon la configuration de la poussette, préférentiellement entre 40° et 60° ; mais une fois que l'adaptation initiale est effectuée, et que l'angle α ajusté, les bras ne doivent plus pouvoir tourner autour de leur extrémités basse par rapport à la platine support 2.

L'inclinaison des bras favorise une bonne adhérence de la roue motrice sur le sol dans la direction de marche avant en effet, le couple à la roue produit une force dirigée vers l'avant qui a tendance à refermer l'angle **β** (autrement dit ouvrir l'angle **α**) ce qui a pour effet induit d'écraser la roue au sol et d'augmenter l'adhérence. Des essais ont montré que la gamme de valeurs mentionnées ci-dessus concernant l'angle **α** est particulièrement avantageuse du point de vue de la bonne adhérence au sol.

On illustre à la figure 9 un parcours en courbe. Les roues arrière **15** de la poussette ne sont pas directrices, elles sont montées fixes. Les roues avant **16** de la poussette sont montées sur un axe vertical tournant (montage de type roue folle suiveuse).

Pour entamer un virage, l'utilisateur imprime un couple transversal sur la barre de manœuvre **54** ce qui a pour effet d'orienter d'une part les roues avant **16** dans la direction où la poussette doit aller, et la roue motorisée **1** à l'opposé. Un arc de trajectoire **TR** est ainsi défini.

Le taux d'assistance sera modéré pour ne pas provoquer un excès de virage.

Alternativement, le taux d'assistance pourrait dépendre de la position angulaire de la chape **6.**

Dans tous les cas, comme indiqué plus haut, la gâchette de commande peut avoir deux positions correspondant à deux taux d'assistance progressif, ou plus de deux positions, ou même une commande proportionnelle.

Pour revenir à une trajectoire en ligne droite, l'utilisateur **U** doit exercer un effort qui tend à annuler la courbure, et l'angle de la chape ainsi de celui des roues avant **16** est ramené vers 0.

Selon une variante de réalisation représentée à la figure 10, on peut prévoir deux roues motrices **1,1'** de part et d'autre de la platine-support, auquel cas l'espace médian TS la platine-support est complètement libre pour l'évolution des pieds de l'utilisateur **U** qui conduit la poussette.

Sur la Figure 12, le schéma bloc du système illustre la ou les batteries électriques **12** déjà mentionnées, l'unité de commande **11,** la gâchette électrique et la roue motorisée.

En outre, il peut y avoir un capteur de rotation **81** sur le moteur qui délivre une information **82** correspondante vers l'unité de commande **11,** pour le pilotage en couple du moteur.

### Second mode de réalisation

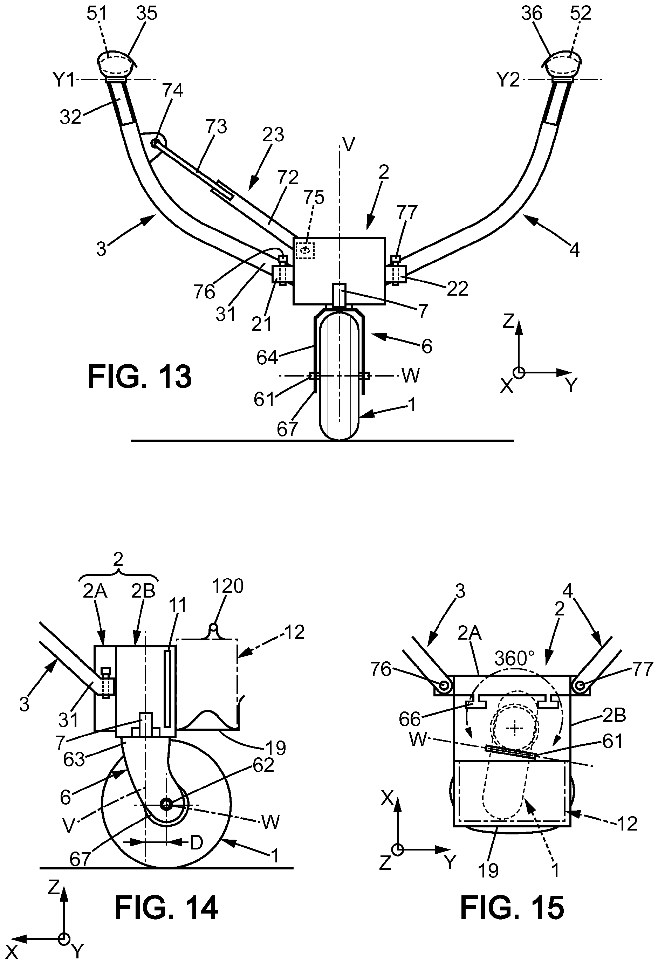

Il est illustré aux figures 13, 14 et 15 un second mode de réalisation, avec une platine-support 2 étroite sans marchepied. Les éléments non décrits à nouveau sont considérés comme identiques ou similaires à ceux déjà décrits pour le premier mode de réalisation.

Selon cette configuration, la platine-support **2** présente des dimensions réduites notamment en largeur ; dans ce cas, les premier et second bras **3,4** s'étendent en oblique à partir de la platine-support centrale en position médiane (c'est-à-dire autrement dit, la disposition des bras forme généralement un V ou U avec la pointe du V / base du U sur la platine support).

De plus, dans l'exemple illustré, le premier bras **3** et le second bras **4** présentent chacun une courbure générale avec une forme convexe dirigée vers l'extérieur de la poussette. Comme illustré schématiquement, les bras peuvent abriter en position haute une rallonge à réglage par exemple à l'aide de colliers de selle.

L'extrémité basse **31** du premier bras est attachée au premier côté **21** de la platine par une liaison **76** qui peut présenter au moins une rotation selon l'axe vertical (mais possible également en latéral). L'extrémité haute **32** du premier bras est fixée de façon détachable à un montant **51** de l'engin à propulser grâce aux moyens de fixation **35** déjà mentionnés plus haut. De façon similaire l'extrémité basse **41** du second bras **4** est attachée au second côté **22** de la platine par une liaison **77** symétrique à la première **76.**

Pour maintenir la rigidité des réglages des bras en largeur en phase de poussée et dans les circonstances où l'on désaccouple le module d'assistance **10** de la poussette, il est prévu une biellette de liaison **23** qui permet de rigidifier et conserver au moins en partie les réglages de position mécanique adaptés à la poussette en question. Cette biellette de liaison **23** est attachée à la platine-support **2** par une fixation **75** et d'autre part attachée au premier bras **3** par une deuxième fixation **74** à l'opposé de la première. La biellette de liaison **23** comprend une tige **73** reçue à coulissement dans un cylindre **72** avec des moyens de blocage du coulissement (non représenté aux figures) ce qui permet de figer la configuration. la biellette **23** est donc réglable en longueur.

Comme illustré à la figure 14, dans ce second mode de réalisation, la platine-support **2** est en pratique réalisé par l'assemblage d'un flasque **2A** et d'un boîtier principal **2B.** Le boîtier principal **2B** s'emboîte dans le flasque **2A** au moyen d'un dispositif glissière utilisant des formes complémentaires de type tenon et mortaise **66** ou profil à queue d'aronde. Ce système de glissière permet l'adaptation de différents types de bras en fonction de la dimension et de l'architecture des différents types d'engins à propulser. Un blocage selon la direction verticale complète cet assemblage.

L'unité de commande **11** est contenue dans le boîtier principal **2B** ainsi que le la liaison à rotation sur laquelle la chape **6** de roue est montée, ainsi que le connecteur électrique tournant **7.**

Dans cette configuration, la batterie électrique **12** est amovible, elle peut être rechargée à distance du module d'assistance ; elle est avantageusement reçue dans un logement **19** prévu à cet effet qui peut être complémenté par des sangles de maintien. La batterie électrique **12** comprend une poignée de préhension repérée **120.**

La chape **6** comprend une couronne supérieure **63** faisant partie de la liaison à rotation libre, deux jambes **64** de part et d'autre de la roue avec chacune une partie distale **67.** Il est prévu dans chaque partie distale des jambes de la chape un orifice **62** aligné sur l'axe de roue **W** et recevant l'arbre **61** supportant la roue.

Dans ce second mode de réalisation comme dans le premier, une fois le(s) réglage effectué, les liaisons entre les différents éléments [platine-support, bras montants] sont établies de façon rigide et cet ensemble fournit une structure robuste avec une faible élasticité pour guider de façon précise la poussette ainsi que la roue montée sur la chape tournante. Les seuls mouvements substantiels observés sont la rotation de la chape **6** autour de l'axe vertical **V** et la rotation propre de la roue **1** autour de l'axe de roue **W** (et le cas échéant comme dans le premier mode de réalisation - voir figure 8 - une rotation des bras autour de l'axe Y1,Y2 en fonction de la configuration du terrain pour garder l'adhérence de la roue moteur en toute circonstance, passer les seuils, trottoirs, etc...)

On note que, avantageusement selon la présente invention, pour une roue motorisée, il n'y a qu'un seul moteur (celui de traction), et il n'y a pas de contrôle motorisé de l'orientation de la chape 6 supportant la roue, l'orientation est donnée 'naturellement' par le décalage D des axes V,W et un effort latéral modéré exercé sur la barre de préhension 54 par l'utilisateur.

S'agissant des matières employées, notamment pour la réalisation de la platine support 2, et des bras 3,4, on pourra employer de préférence un alliage d'aluminium qui combine légèreté et robustesse ; toutefois il n'est pas exclu d'utiliser d'autres matériaux, métalliques du plastique, pour la platine-support, les bras, et les différentes autres pièces comprises dans le module d'assistance 10.

## Revendications

1. Dispositif d'assistance (10) à la mobilité, destiné à être accouplé à un engin à propulser (5) de type poussette ou fauteuil roulant ou caddie™ ou chariot léger à au moins trois roues à conduite manuelle, le dispositif comprenant :
- au moins une roue motorisée (1) montée grâce à une liaison articulée sur une platine-support (2),
- un premier bras (3) relié, à une première de ses extrémités (31), à un premier côté de la platine-support, et comporte, à une deuxième de ses extrémités (32), un premier moyen de fixation (35) à un premier montant (51) de l'engin à propulser,
- un deuxième bras (4) relié, à une première de ses extrémités (41), à un deuxième côté de la platine-support, et comporte, une deuxième de ses extrémités (42), un deuxième moyen de fixation (36) à un deuxième montant (52) de l'engin à propulser,
**caractérisé en ce que** la liaison articulée est telle que la roue motorisée (1) est montée sur une chape (6) selon un axe de roue horizontal (W), la chape étant montée à rotation libre sur la platine-support selon un axe vertical (V), et **en ce que** la liaison articulée comporte une connexion électrique tournante (7) pour alimenter le moteur de la roue en énergie électrique, sur une plage angulaire d'au moins 360° concernant la chape autour de l'axe vertical.

2. Dispositif d'assistance selon la revendication 1, dans lequel les premier et deuxième bras sont à réglage télescopique, et sont de préférence inclinés d'un angle (β) d'au moins 15 degrés par rapport à la verticale en position d'accouplement sur l'engin.

3. Dispositif d'assistance selon l'une des revendications 1 à 2, comprenant au moins une batterie (12), une gâchette électrique de commande (14), et une unité de commande (11).

4. Dispositif d'assistance selon l'une des revendications 1 à 3, dans lequel les premier et deuxième moyens de fixation comportent une rotule (Y1) et une attache rapide, pour faciliter la fixation à divers types de montant.

5. Dispositif d'assistance selon l'une des revendications 1 à 4, dans lequel l'axe de roue horizontal (W) est séparé de l'axe vertical (V) de rotation de la chape par une distance (D) au moins égale à 10 mm.

6. Dispositif d'assistance selon l'une des revendications 1 à 4, dans lequel il est prévu une biellette (23) reliant la platine support (2) et un des bras (3,4), la biellette étant réglable en longueur.

7. **Engin** de type **poussette** ou fauteuil roulant ou caddie™ ou chariot léger à au moins trois roues, motorisé par un dispositif d'assistance selon l'une des revendications 1 à 6.

8. **Poussette** (5) motorisée par un dispositif d'assistance (10) selon l'une des revendications 1 à 6, les premier et deuxième bras étant fixés aux montants ou à la structure de la poussette et inclinés par rapport à la verticale d'un angle (β) compris entre 30 et 80 degrés, et plus préférentiellement compris entre 40 et 60 degrés.

9. Poussette selon la revendication 8, dans lequel la platine-support forme marchepied (20) ou plateforme pour accueillir un enfant ou des objets.

10. Poussette selon l'une des revendications 8 à 9, dans lequel la platine-support comprend des roulettes latérales (8G,8D), qui lorsque la roue motorisée repose au sol, et sans contrainte sur la platine-support, les roulettes latérales sont espacées du sol d'un garde prédéfinie (E) comprise entre 0,5 cm et 2 cm, préférentiellement 1 cm.

11. Poussette selon l'une des revendications 8 à 10, dans lequel la platine-support présente une garde au sol (GS) d'au moins 20 cm de part et d'autre de la roue motorisée.

12. Poussette selon l'une des revendications 8 à 11, dans lequel il est prévu un réglage en largeur grâce à deux tubes (9G,9D) reçus dans une glissière ménagée dans la platine-support, les premier et deuxième bras étant fixés aux extrémités extérieures des tubes.

## Patentansprüche

1. Hilfsvorrichtung (10) zur Erleichterung der Mobilität, welche zur Ankupplung an eine Antriebsvorrichtung (5) vom Typ eines Kinderwagens oder eines Rollstuhls oder eines caddie™ oder eines leichten Wagens mit wenigstens drei Rädern mit Handbedienung bestimmt ist, wobei die Vorrichtung folgendes umfasst:
- wenigstens ein motorisiertes Rad (1), das über eine Gelenkverbindung an einer Trägerplatte (2) befestigt ist,
- einen ersten Arm (3), der an einem ersten seiner Enden (31) mit einer ersten Seite der Trägerplatte verbunden ist, und an einem zweiten seiner Enden (32) ein erstes Befestigungsmittel (35) an einem ersten Holm (51) der Antriebsvorrichtung aufweist,
- einen zweiten Arm (4), der an einem ersten seiner Enden (41) mit einer zweiten Seite der Trägerplatte verbunden ist, und an einem zweiten seiner Enden (42) ein zweites Befestigungsmittel (36) an einem zweiten Holm (52) der Antriebsvorrichtung aufweist, **dadurch gekennzeichnet, dass** die Gelenkverbindung derart gestaltet ist, dass das motorisierte Rad (1) entsprechend einer horizontalen Radachse (W) an einer Gabel (6) befestigt ist, wobei die Gabel frei drehbar an der Trägerplatte entsprechend einer vertikalen Achse (V) befestigt ist, und **dadurch gekennzeichnet, dass** die Gelenkverbindung eine drehbare elektrische Verbindung (7) aufweist, um das Rad bezüglich der Gabel mit elektrischer Energie über einen Winkelbereich von mindestens 360° um die vertikale Achse zu versorgen.

2. Hilfsvorrichtung gemäß Anspruch 1, **dadurch gekennzeichnet, dass** der erste und der zweite Arm teleskopisch verstellbar sind, und vorzugsweise um einen Winkel (β) von wenigstens 15 Grad zur Senkrechten in der Ankoppelungsposition an die Antriebsvorrichtung geneigt sind.

3. Hilfsvorrichtung gemäß Anspruch 1 oder 2, **dadurch gekennzeichnet, dass** sie wenigstens eine Batterie (12), einen elektrischen Steuerhebel (14), und eine Steuereinheit (11) aufweist.

4. Hilfsvorrichtung gemäß einem der Ansprüche 1 bis 3, **dadurch gekennzeichnet, dass** das erste und das zweite Befestigungsmittel einen Kugelkopf (Y1) und eine Schnellspannvorrichtung aufweisen, um die Befestigung an unterschiedliche Holmtypen zu erleichtern.

5. Hilfsvorrichtung gemäß einem der Ansprüche 1 bis 4, **dadurch gekennzeichnet, dass** die horizontale Radachse (W) von der vertikalen Rotationsachse (V) der Gabel durch eine Distanz (D) von mindestens 10 mm beabstandet ist.

6. Hilfsvorrichtung gemäß einem der Ansprüche 1 bis 4, **dadurch gekennzeichnet, dass** ein Schwingarm (23), der die Trägerplatte (2) und einen der Arme (3, 4) miteinander verbindet, vorgesehen ist, wobei der Schwingarm längenverstellbar ist.

7. Antriebsvorrichtung vom Typ eines Kinderwagens oder eines Rollstuhls oder eines caddie™ oder eines leichten Wagens mit wenigstens drei Rädern, welche mittels einer Hilfsvorrichtung gemäß einem der Ansprüche 1 bis 6 motorisiert ist.

8. Kinderwagen (5), der mittels einer Hilfsvorrichtung (10) gemäß einem der Ansprüche 1 bis 6 angetrieben wird, **dadurch gekennzeichnet, dass** der erste und der zweite Arm an den Holmen oder an der Struktur des Kinderwagens befestigt sind und zur Senkrechten um einen Winkel (β) zwischen 30 und 80 Grad, und noch bevorzugter zwischen 40 und 60 Grad, geneigt sind.

9. Kinderwagen gemäß Anspruch 8, **dadurch gekennzeichnet, dass** die Trägerplatte ein Trittbrett (20) oder eine Plattform bildet, um ein Kind oder Gegenstände aufzunehmen.

10. Kinderwagen gemäß einem der Ansprüche 8 bis 9, **dadurch gekennzeichnet, dass** die Trägerplatte seitliche Rollen (8G,8D) aufweist, wobei die seitlichen Rollen, wenn das motorisierte Rad auf dem Untergrund aufliegt, und kein Druck auf die Trägerplatte ausgeübt wird, vom Untergrund entsprechend einer vordefinierten Bodenfreiheit (E) zwischen 0,5 cm und 2 cm, vorzugsweise von 1 cm beabstandet sind.

11. Kinderwagen gemäß einem der Ansprüche 8 bis 10, **dadurch gekennzeichnet, dass** die Trägerplatte eine Bodenfreiheit (GS) von mindestens 20 cm auf beiden Seiten des motorisieren Rades aufweist.

12. Kinderwagen gemäß einem der Ansprüche 8 bis 11, **dadurch gekennzeichnet, dass** eine Breitenverstellung mittels zwei Röhren (9G,9D) vorgesehen ist, welche in einer Gleitschiene in der Trägerplatte angeordnet sind, wobei der erste und der zweite Arm an den äußeren Enden der Röhren befestigt sind.

## Claims

1. A mobility assistance device (10), for being coupled to a vehicle to be propelled (5) of the push chair or wheel chair or caddie™ or light trolley hand-operated type, with at least three wheels, the device comprising:
- at least one motorised wheel (1) mounted by means of a hinged linkage on a support plate (2),
- a first arm (3) interconnected, at a first of its ends (31), to a first side of the support plate, and includes, at a second of its ends (32), a first means (35) for attaching to a first frame (51) of the vehicle to be propelled,
- a second arm (4) interconnected, at a first of its ends (41), to a second side of the support plate, and includes, at a second of its ends (42), a second means (36) for attaching to a second frame (52) of the vehicle to be propelled,
**characterised in that** the hinged linkage is such that the motorised wheel (1) is mounted to a fork (6) along a horizontal wheel axis (W), the fork being freely rotatably mounted to the support plate along a vertical axis (V), and **in that** the hinged linkage includes a rotating electrical connection (7) to supply the motor of the wheel with electric energy, over an angular range of at least 360° regarding the fork about the vertical axis.

2. The assistance device according to claim 1, wherein the first and second arms are telescopically adjusted, and are preferably tilted by an angle (β) of at least 15 degrees relative to the vertical in a coupling position on the vehicle.

3. The assistance device according to one of claims 1 to 2, comprising at least one battery (12), an electric control trigger (14), and a control unit (11).

4. The assistance device according to one of claims 1 to 3, wherein the first and second attaching means include a ball joint (Y1) and a quick release fastener, to facilitate attachment to different frame types.

5. The assistance device according to one of claims 1 to 4, wherein the wheel horizontal axis (W) is separated from the rotational vertical axis (V) of the fork by a distance (D) at least equal to 10mm.

6. The assistance device according to one of claims 1 to 4, wherein a tie rod (23) interconnecting the support plate (2) and one of the arms (3, 4) is provided, the tie rod being adjustable in length.

7. A vehicle of the push chair or wheel chair or caddie™ or light trolley type with at least three wheels, motorised by an assistance device according to one of claims 1 to 6.

8. A push chair (5) motorised by an assistance device (10) according to one of claims 1 to 6, the first and second arms being attached to the frames or to the structure of the push chair and tilted relative to the vertical by an angle (β) between 30 and 80 degrees, and more preferentially between 40 and 60 degrees.

9. The push chair according to claim 8, wherein the support plate forms a foot rest (20) or platform to accommodate a child or objects.

10. The push chair according to one of claims 8 to 9, wherein the support plate comprises side casters (8G, 8D), which when the motorised wheel rests on the ground, and without any stress on the support plate, the side casters are spaced from the ground by a predefined clearance (E) between 0.5cm and 2cm, preferentially 1cm.

11. The push chair according to one of claims 8 to 10, wherein the support plate has a ground clearance (GS) of at least 20cm on either side of the motorised wheel.

12. The push chair according to one of claims 8 to 11, wherein a width adjustment by means of two tubes (9G, 9D) received into a slide rail provided in the support plate is provided, the first and second arms being attached to the external ends of the tubes.
